# FASCICULE DE BREVET EUROPEEN

(11) **EP 3 903 363 B1**
(45) Date de publication et mention de la délivrance du brevet: **16.11.2022**
(21) Numéro de dépôt: 19827755.0
(22) Date de dépôt: 23.12.2019
(51) Int. Cl.: H01M 10/052, H01M 10/058, H01M 10/625, H01M 10/6568, H01M 10/6555, H01M 10/643, H01M 10/623, H01M 10/613, H01M 10/658, H01M 50/20, H01M 50/24

(54) **MODULE DE BATTERIE ELECTRIQUE ET BATTERIE COMPORTANT AU MOINS UN TEL MODULE**
ELEKTRISCHES BATTERIEMODUL UND BATTERIE MIT MINDESTENS EINEM SOLCHEN MODUL
ELECTRIC BATTERY MODULE AND BATTERY COMPRISING AT LEAST ONE SUCH MODULE

(30) Priorité: 28.12.2018 FR 1874291
(43) Date de publication de la demande: 03.11.2021
(73) Titulaire: Sogefi Air & Cooling (SAS), 78280 Guyancourt (FR)
(72) Inventeur: BECKER, Nicolas, 68320 PORTE-DU-RIED (FR); FLORANC, Alexandre, 68280 LOGELHEIM (FR); HALBARDIER, Jonathan, 68230 TURCKHEIM (FR)
(74) Mandataire: Cabinet Nuss
(86) Numéro de dépôt international: PCT/EP2019/086902
(87) Numéro de publication internationale: WO 2020/136158

(56) Documents cités:
- EP-A2- 2 362 463
- DE-A1-102010 045 707
- FR-A1- 3 062 521
- FR-A3- 2 988 915

## Description

La présente invention concerne le domaine du stockage d'énergie électrique, plus particulièrement celui des batteries électriques comprenant une pluralité d'accumulateurs individuels, notamment des batteries pour véhicules automobiles, et a pour objets un module de batterie et une batterie comprenant au moins un tel module.

De nombreuses batteries, notamment de grande autonomie et de forte puissance, en particulier les batteries embarquées des véhicules automobiles thermiques, hybrides ou électriques, sont actuellement constituées d'une multitude d'éléments de batterie individuels (accumulateurs élémentaires), en particulier du type Li-ion ou Li-polymère.

Chacun de ces éléments se présente de manière standard sous la forme d'un cylindre étanche et isolé électriquement, pourvu de bornes de connexion à ses extrémités opposées ou au niveau d'une extrémité. Ils sont, en vue de leur maintien groupé à l'état monté, reliés entre eux, généralement par collage ou résinage, en barrettes ou en blocs, sur un ou plusieurs étage(s).

Toutefois, un tel assemblage serré avec un matériau liant présente des inconvénients.

Ainsi, lorsque leur nombre est important, la surchauffe (du fait d'un court-circuit ou d'un dysfonctionnement) d'un élément peut endommager toute la batterie par contamination et amplification du fait du confinement. En outre, une régulation en température des éléments internes d'un tel bloc est problématique, voire impossible par ventilation naturelle. De plus, en cas de défaillance d'un élément d'un bloc, tout le bloc doit être changé. Enfin, la tenue dans le temps de l'assemblage matière dans des conditions climatiques exigeantes est sujette à caution et la constance de la qualité de réalisation de l'assemblage douteuse.

Pour tenter de surmonter ces inconvénients, des moyens d'assemblage mécanique des éléments entre eux, dans un boîtier de protection, ont été proposés. EP2362463 divulgue un module de batterie conformément au préambule de la revendication 1.

Toutefois, de manière générale, ces solutions connues mettent en oeuvre un nombre important de pièces de maintien séparées, notamment lorsque les éléments de batterie doivent être maintenus individuellement nécessitent une enveloppe extérieure résistante et apte à reprendre les contraintes internes et/ou ne sont pas conçues dans le but d'une régulation thermique efficace de tous les éléments, ni d'une protection de la majorité des éléments en cas de défaillance d'un seul.

Le problème posé à l'invention consiste par conséquent à proposer une réalisation de batterie simple fournissant une régulation thermique améliorée par rapport aux solutions connues, sans complexifier la construction et sans nécessiter de ventilation forcée, et dans laquelle les éléments sont maintenus solidement et avantageusement protégés en cas de défaillance de l'un d'entre eux.

Enfin, la réalisation proposée devrait pouvoir être aisément déclinable dans des formats de batterie de taille et de puissance variables.

A cet effet, l'invention a pour objet un module de batterie électrique, en particulier de batterie pour véhicule automobile, comprenant une pluralité d'accumulateurs individuels sous la forme d'éléments ou de cellules de batterie de constitution allongée et préférentiellement cylindrique, ces éléments de batterie, qui présentent une conductivité thermique plus élevée selon leur direction longitudinale que leur direction radiale, étant agencés en rangées parallèles, reliés électriquement entre eux et aux bornes du module et montés dans un contenant faisant partie dudit module,
module de batterie caractérisé en ce que le contenant comprend :
d'une part, au moins un corps support en un matériau rigide et bon conducteur thermique, en particulier un matériau métallique tel que l'aluminium ou un alliage de ce dernier, ce corps support se présentant sous la forme d'une pièce profilée à section transversale en forme de peigne, avec une pluralité de parois de compartimentation mutuellement parallèles et régulièrement espacées entre elles et avec une paroi de fond reliant lesdites parois de compartimentation à leurs bases, chaque paire de parois de compartimentation voisines délimitant avec la paroi de fond une rainure profilée formant un logement allongé configuré pour recevoir de manière non ajustée une rangée d'éléments de batterie avec leurs axes longitudinaux perpendiculaires à la paroi de fond et en appui sur cette dernière, et,
d'autre part, au moins des premiers moyens de calage mécanique, rapportés ou intégrés s'étendant au moins partiellement entre deux éléments de batterie voisins, ce pour tous les éléments d'une même rangée, de manière à limiter, préférentiellement bloquer, les mouvements desdits éléments au moins dans la direction longitudinale du logement les recevant et à maintenir écartés lesdits éléments des deux parois de compartimentation définissant le logement allongé les recevant.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue en perspective d'un module de batterie selon l'invention ;
[Fig. 2] est une vue en perspective du module de la figure 1, le second élément ou moyen de calage étant enlevé et un moyen de régulation thermique propre étant rapporté ;
[Fig. 3] est une vue partiellement éclatée d'une batterie selon un premier mode de réalisation de l'invention, intégrant un unique module de batterie tel que représenté figure 1 ;
[Fig. 4] est une vue en perspective de la batterie de la figure 3 à l'état assemblé ;
[Fig. 5] est une vue éclatée en perspective des différents éléments constitutifs d'une batterie selon l'invention telle que représentée figures 3 et 4 et en accord avec le premier mode de réalisation (pour des raisons de lisibilité seule une barrette d'éléments de batterie est représentée) ;
[Fig. 6] est une vue en coupe transversale tronquée, selon un plan perpendiculaire à la direction longitudinale des logements de réception des éléments de batterie, de la batterie représentée figure 4 ;
[Fig. 7] est une vue en perspective d'une barrette d'éléments de batterie selon l'invention, ressortant également de la figure 5 ;

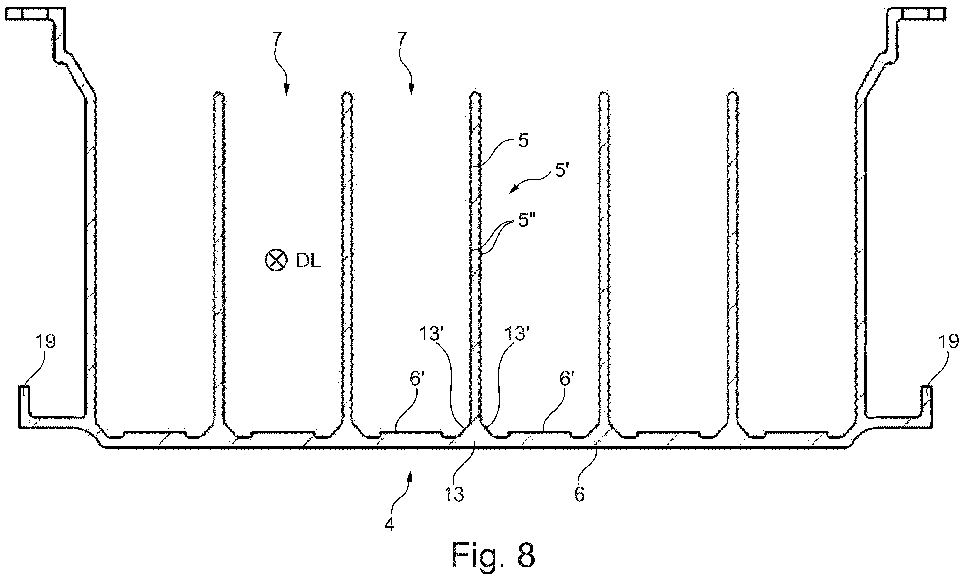

[Fig. 8] est une vue en coupe d'un corps support faisant partie du contenant d'un module de batterie selon l'invention ;
[Fig. 9] est une vue en perspective d'un premier élément du moyen de calage faisant partie d'un module selon l'invention ;
[Fig. 10] est une vue en perspective d'un second moyen ou élément de calage faisant partie d'un module selon l'invention ;
[Fig. 11] est une vue en coupe similaire à celle de la figure 6 du module partiellement monté de la figure 2, mais équipé d'un moyen de régulation en température ;
[Fig. 12] est une vue partielle de détail, à une échelle différente, extraite de la vue en coupe de la figure 11, lors de la mise en place du second moyen ou élément de calage ;

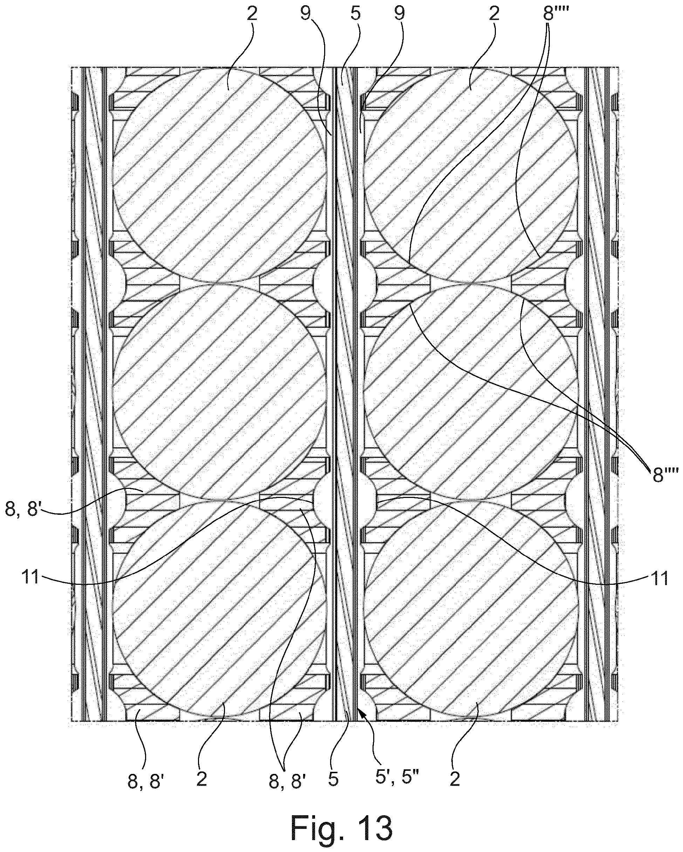

[Fig. 13] est une vue partielle de dessus, à une échelle différente, du module de batterie partiellement monté de la figure 11 ;
[Fig. 14] est une vue de détail, à une échelle différente, de la paroi de fond et de l'extrémité inférieure d'un module de batterie tel que représentés sur les figures 1 et 6 ;
[Fig. 15A] est une vue en perspective d'un second mode de réalisation d'une batterie intégrant deux modules de batterie selon l'invention ;
[Fig. 15B] est une vue en perspective de la batterie représentée figure 15A, vue selon un autre angle et les couvercles étant enlevés ;
[Fig. 16A] est une vue en coupe partielle, selon un plan perpendiculaire à la direction longitudinale des logements allongés recevant les éléments de batterie de la batterie de la figure 15A ;
[Fig. 16B] est une vue en coupe des deux modules de batterie d'une batterie selon la figure 15A, selon un plan de coupe similaire à celui de la figure 16A, en accord avec un autre mode de réalisation ;
[Fig. 17] est une vue en perspective d'un troisième mode de réalisation d'une batterie intégrant une pluralité de modules de batterie selon l'invention, cette batterie étant en cours d'assemblage, et,
[Fig. 18] est une vue partielle en coupe transversale de la batterie de la figure 17.

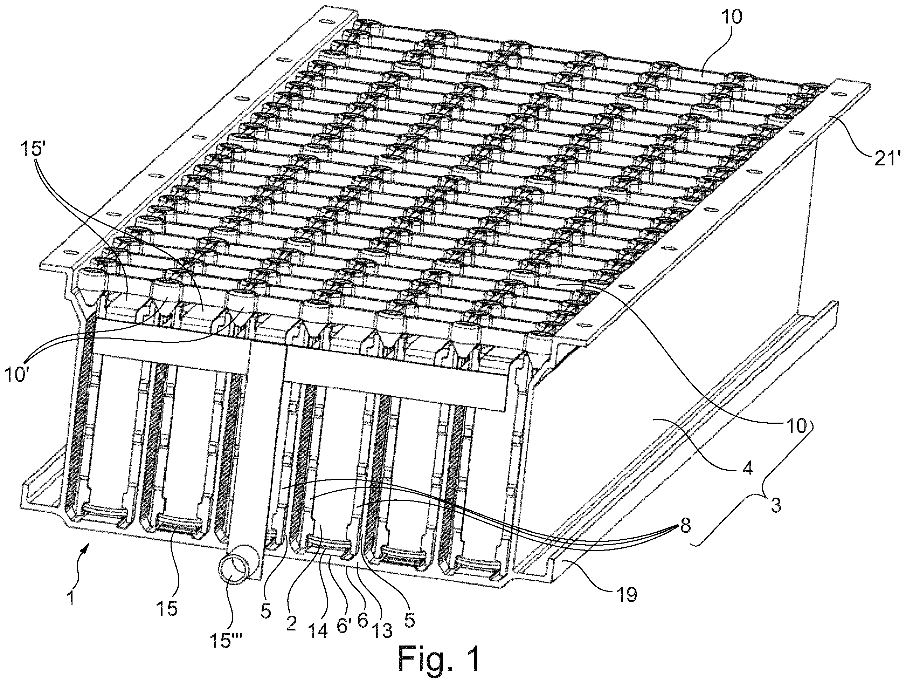

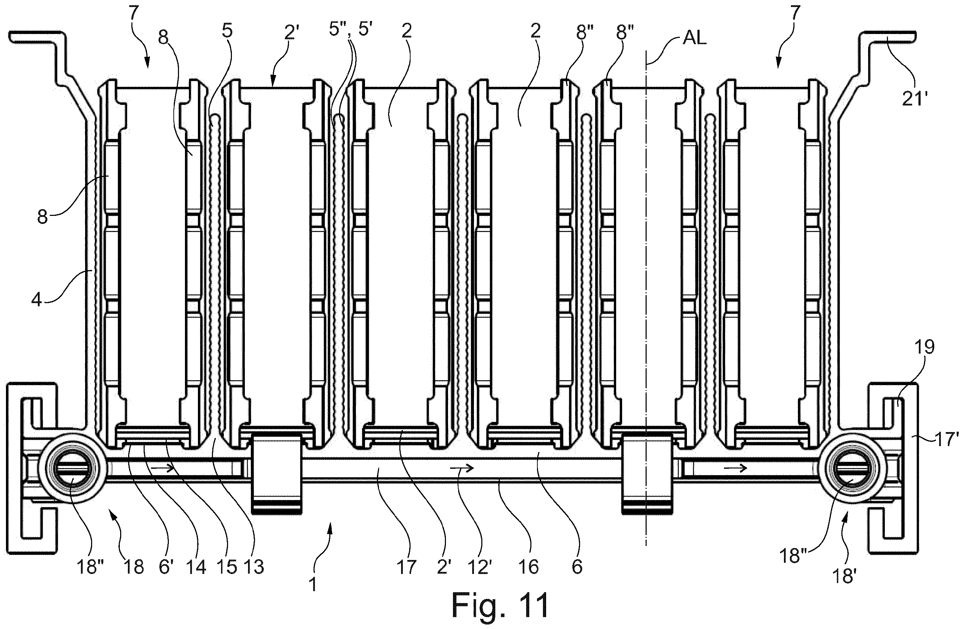

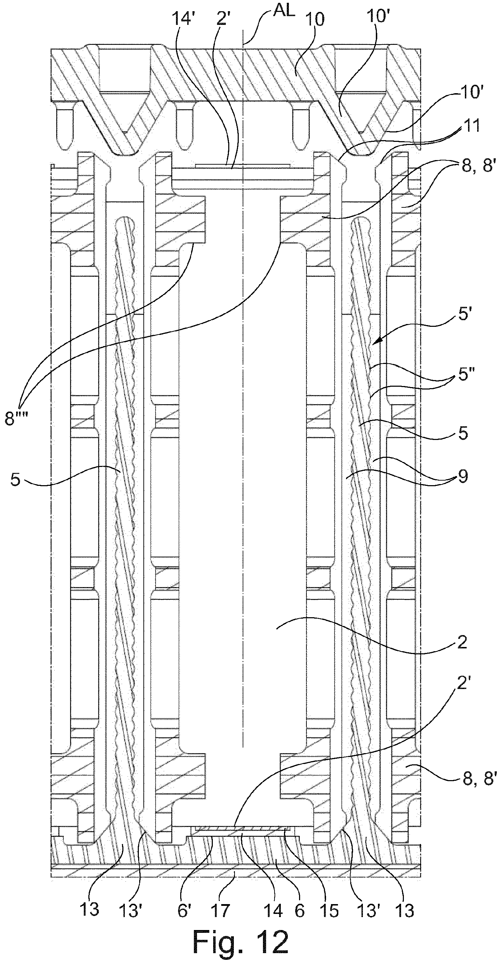

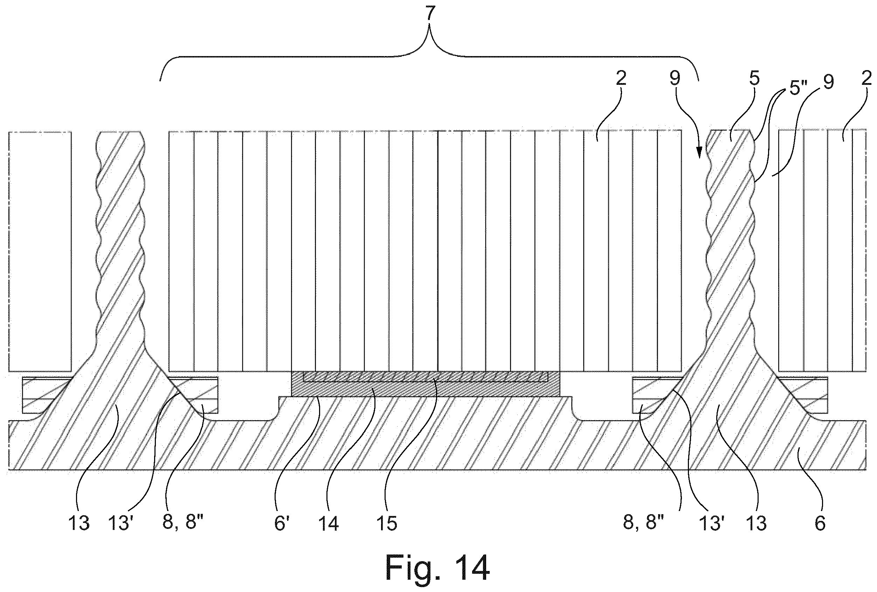

Les figures 1 à 3, 5, 11, 12, 14 et 16 montrent toutes, pour certaines seulement en partie, un module 1 de batterie électrique, en particulier de batterie pour véhicule automobile, comprenant une pluralité d'accumulateurs individuels 2 sous la forme d'éléments ou de cellules de batterie de constitution allongée et préférentiellement cylindrique, ces éléments de batterie 2, qui présentent une conductivité thermique plus élevée selon leur direction longitudinale que leur direction radiale, étant agencés en rangées Ri parallèles, reliés électriquement entre eux et aux bornes du module 1 et montés dans un contenant 3 faisant partie dudit module 1.

Conformément à l'invention, le contenant 3 comprend, d'une part, au moins un corps support 4 en un matériau rigide et bon conducteur thermique, en particulier un matériau métallique tel que l'aluminium ou un alliage de ce dernier, ce corps support 4 se présentant sous la forme d'une pièce profilée à section transversale en forme de peigne, avec une pluralité de parois de compartimentation 5 mutuellement parallèles et régulièrement espacées entre elles et avec une paroi de fond 6 reliant lesdites parois de compartimentation 5 à leurs bases, chaque paire de parois de compartimentation 5 voisines délimitant avec la paroi de fond 6 une rainure profilée 7 formant un logement allongé configuré pour recevoir de manière non ajustée une rangée Ri d'éléments de batterie 2 avec leurs axes longitudinaux AL perpendiculaires à la paroi de fond 6 et en appui sur cette dernière.

Ce contenant 3 comprend aussi, d'autre part, au moins des premiers moyens 8 de calage mécanique, rapportés ou intégrés s'étendant au moins partiellement entre deux éléments de batterie 2 voisins, ce pour tous les éléments 2 d'une même rangée Ri, de manière à limiter, préférentiellement bloquer, les mouvements desdits éléments 2 au moins dans la direction longitudinale DL du logement 7 les recevant et à écarter lesdits éléments 2 des deux parois de compartimentation (5) définissant le logement allongé les recevant.

Ainsi, en prévoyant un corps support 4 profilé à section en peigne, la pluralité d'éléments de batterie 2, bien que restant groupé (forte densité de puissance), est stockée en étant segmentée en rangées Ri par des parois de compartimentation 5 du corps support 4, ce dernier permettant ainsi de les maintenir en place fermement, de les séparer physiquement et électriquement (isolation des rangées Ri entre elles) et de les réguler thermiquement de manière efficace (en les exposant individuellement à l'action régulatrice en température des parois conductrices latérales et de fond 5 et 6 - régulation directement transposée à l'intérieur du groupe d'éléments de batterie 2).

Le maintien précis et individuel des éléments de batterie 2 dans les rainures du corps support 4 fournit par les premiers moyens de calage 8 autorise la formation et la préservation d'interstices 9 de circulation d'air le long des rangées Ri, ainsi qu'autour et éventuellement entre les éléments 2 de chaque rangée.

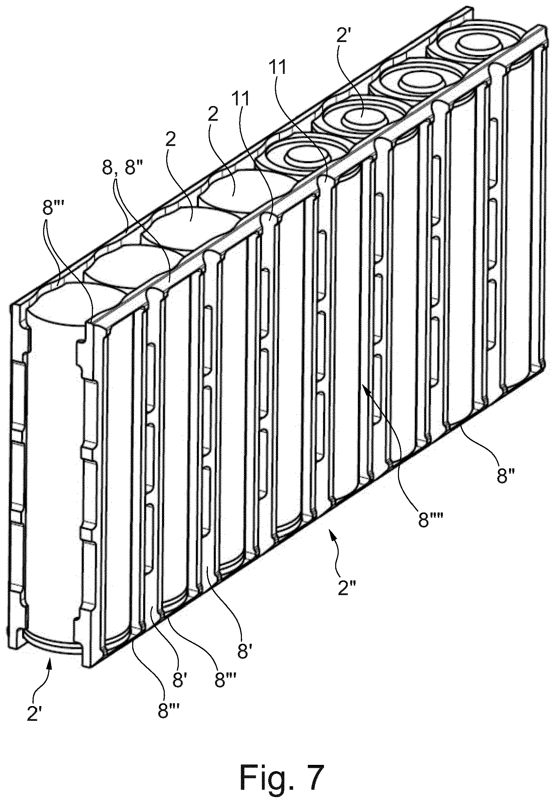

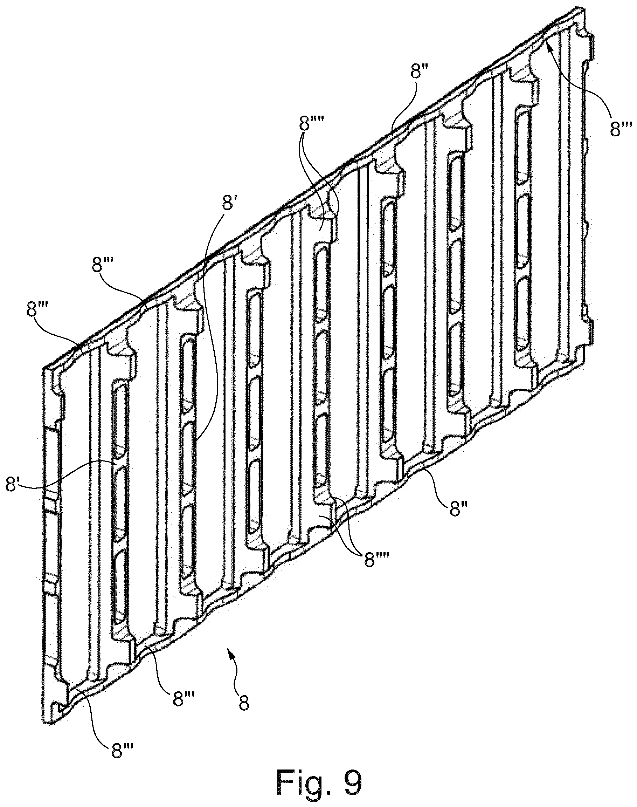

Les éléments de batterie 2 en alignements simples et de forme cylindrique sont par conséquent exposés sur la totalité de leur surface latérale aux flux d'air circulant et régulés par le corps support 4, en particulier lorsque lesdits éléments sont maintenus à faible distance les uns des autres par les premiers moyens de calage 8 (par exemple en prévoyant des projections en forme de coins avec des zones de contact 8ʺʺ incurvées - voir figures 7 et 9).

En plus de ces blocages en position des éléments de batterie 2 dans des directions multiples (deux axes et un demi-axe), le corps support 4 constitue également avec ses deux parois latérales extérieures et sa paroi de fond, une enveloppe de protection.

Enfin, en proposant un corps support 4 sous forme de profilé métallique d'un seul tenant (par exemple venant d'extrusion) et à section transversale en forme de peigne (donc intégrant de façon monobloc des parois latérales 5 et de fond 6), l'invention fournit une construction simple, robuste, optimisée en termes d'échanges et de conduction thermique (compte-tenu de la forme des parois 5 et 6) et avec un composant de base -le corps support 4- aisé et peu coûteux à produire et assurant à lui seul déjà un calage suivant plusieurs directions. De plus, ce corps support 4 assure une subdivision du bloc d'éléments de batterie 2 en plusieurs rangées d'éléments en file indienne, plus faciles à refroidir et dont chaque élément 2 est exposé au maximum à une circulation d'air entre deux parois latérales et en contact avec une paroi de fond, ces différentes parois étant toutes régulées en température.

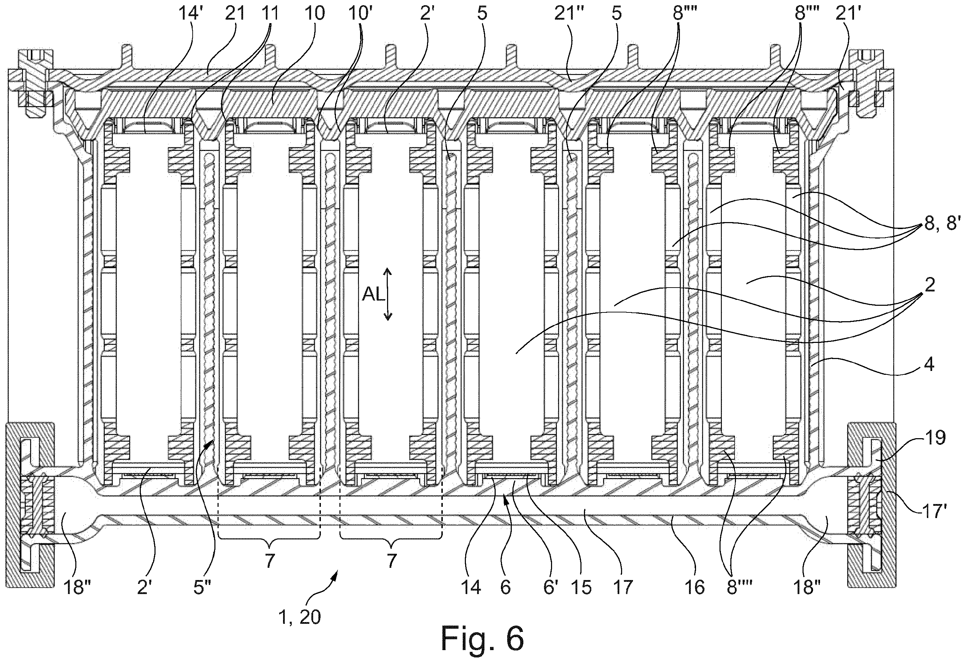

Avantageusement, comme le montrent les figures 1, 2, 6, 7 et 9, les premiers moyens de calage 8 consistent soit en des pièces rapportées d'espacement intercalées entre les faces des deux parois de compartimentation 5 opposées de chaque logement 7 et les éléments de batterie 2 reçus dans ce logement 7, soit en des formations proéminentes, profilées ou non, faisant saillie par rapport aux faces desdites parois 5. Ces pièces ou ces formations 8 sont configurées et positionnées pour constituer des interstices 9 entre les éléments de batterie 2 et lesdites faces 5' des parois 5, avantageusement pour assurer un maintien des éléments de batterie 2 à distance des faces 5' respectivement concernées, préférentiellement pour réaliser un blocage en position avec centrage dans le logement 7 concerné.

Préférentiellement, ces premiers moyens de calage 8 consistent, pour chaque logement 7, en des pièces rapportées en forme d'échelles, ou de cadres pourvus de traverses, dont les barreaux ou traverses 8' constituent ou portent des éléments de butée et d'espacement (par exemple en forme de coins) positionnés respectivement entre deux éléments de batterie 2 voisins et faisant état de zones 8"" de contact linéaires ou surfaciques avec ces derniers, ces pièces de calage 8 étant disposées entre les faces 5' des parois de compartimentation 5 et la rangée Ri d'éléments de batterie 2 concernée, de part et d'autre de cette dernière. Chaque paire de pièces de calage 8 opposées forme ainsi une cage emprisonnant une partie au moins des éléments de batterie 2 de la rangée Ri reçue dans le logement profilé 7 concerné. L'alignement d'éléments 2 de la rangée est ainsi segmenté par ces paires de pièces 8 opposées en unités modulaires renfermant chacune plusieurs éléments (4, 8 ou 12 par exemple).

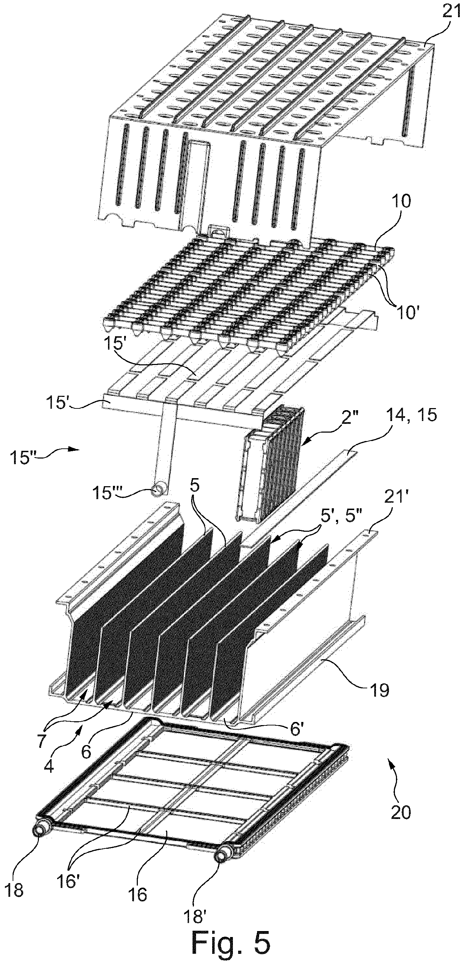

En accord avec une première variante constructive de l'invention, permettant une structuration en sous-modules prémontés des éléments de batterie 2, rendant plus aisé l'assemblage du module de batterie 1, les longerons 8" des pièces de calage 8 en forme d'échelles ou de cadres présentent des bords 8'" configurés pour venir en contact, entre deux barreaux ou traverses 8', avec les extrémités supérieure et inférieure des éléments de batterie cylindriques 2, le cas échéant sous pression et/ou avec déformation élastique, ce au niveau de portions de bords latéraux desdites extrémités, les éléments de batterie 2 emprisonnés entre deux pièces de calage 8 formant ainsi avec elles une barrette 2" (figures 5 et 7).

Dans ces barrettes 2", comprenant par exemple 4 ou 8 éléments de batterie 2 chacune, ces éléments peuvent être orientés de manière identique ou non (par exemple chaque moitié des éléments 2 présente son orientation propre, inversée par rapport à celle de l'autre).

En accord avec une seconde variante constructive de l'invention, non représentée sur les figures, les premiers moyens de calage 8 consistent en des formations saillantes, telles que des bossages, des crêtes, des picots ou analogues, faisant partie intégrante des faces des parois de compartimentation 5 ou de pièces montées sur ces dernières, par exemple par emboîtement.

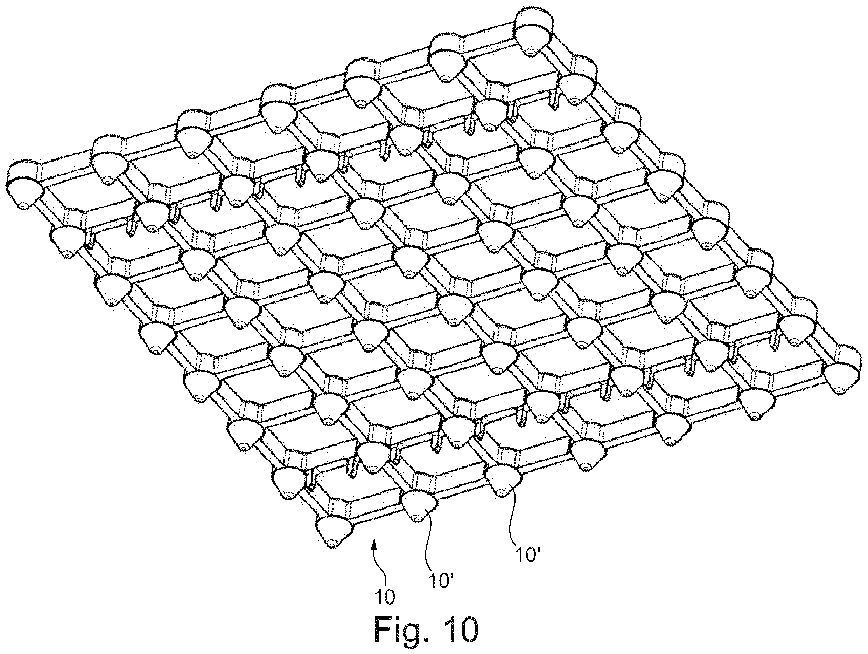

Afin d'assurer un blocage total des éléments de batterie dans le corps support, et donc dans toutes les directions, le contenant 3 comprend en outre des seconds moyens de calage 10 configurés et arrangés pour bloquer les éléments de batterie 2 (assemblés sous forme de barrettes 2" par exemple) contre la paroi de fond 6. Ces seconds moyens de calage 10 se présentent avantageusement sous la forme d'un panneau à structure grillagée, s'étendant par-dessus les logements 7 allongés du corps support 4 et les différentes rangées Ri d'éléments de batterie 2 et venant, le cas échéant, en engagement mécanique avec les premiers moyens de calage 8, au-dessus des parois de compartimentation 5, pour assurer leur positionnement fixe en partie supérieure des logements 7 et assurer leur coopération intime avec lesdits éléments de batterie 2 (voir figures 1, 3, 5, 6, 10 et 16 notamment).

Avantageusement, le panneau à structure grillagée 10 comporte des formations 10' coniques, biseautées ou en forme de coins configurées pour venir s'insérer entre les longerons supérieurs 8" des premières pièces de calage 8 en forme d'échelles ou de cadres disposées de part et d'autre d'une paroi de compartimentation donnée 5, au niveau de sites 11 de formes complémentaires desdits longerons 8", de sorte à solliciter chacun desdits longerons 8" et les barreaux 8' (des pièces 8 concernées) pour venir en contact avec les éléments de batterie 2 respectivement concernés et pris en sandwich entre deux premières pièces de calage 8 mutuellement opposées.

La régulation en température du corps support 4 par un moyen adapté peut être réalisée de différentes manières, par exemple par effet Peltier, par exposition à un flux d'air forcé régulé en température ou autre.

Toutefois, en accord avec un mode de réalisation efficace, économique et structurellement facilement intégrable, il est avantageusement prévu que la paroi de fond 6 est soumise, préférentiellement sensiblement sur l'ensemble de sa surface, à l'action d'un moyen 12 de régulation thermique, par exemple du type à circulation de fluide caloporteur 12', ledit moyen de régulation thermique 12 étant soit propre audit module 1 considéré, soit partagé entre au moins deux modules 1, ou encore appartenant à un ensemble de moyens de régulation thermique associés à plusieurs modules 1.

Un tel moyen 12 de régulation thermique peut en outre aisément se raccorder aux circuits de circulation de fluide d'un véhicule, en cas de batterie embarquée.

Afin de favoriser et d'optimiser la transmission des effets de la régulation thermique entre les parois 5 et l'air circulant par convection naturelle (ou de manière forcée), et avantageusement également en amont entre la paroi de fond 6 et les parois 5, l'invention peut prévoir que les parois de compartimentation 5 présentent, sur leur deux faces 5', une structure de surface 5" non plane, par exemple pourvue d'un motif de nervures/rainures ou d'ondulations profilées. De plus, les zones 13 de jonction desdites parois de compartimentation 5 avec la paroi de fond 6 présentent avantageusement une section évasée en direction de cette dernière, fournissant des surfaces biaisées ou biseautées 13' d'appui latéral et de centrage pour les premiers moyens de calage 8 et/ou les éléments de batterie 2. Les longerons 8" peuvent comporter des bords externes biseautés de manière complémentaire pour coopérer avec ces surfaces 13'.

Les éléments de batterie 2 ont préférentiellement une forme extérieure cylindrique et présentent ainsi une surface latérale extérieure exposée en totalité à la circulation d'air naturelle interne au module 1, même lorsque les éléments 2 voisins d'une barrette 2" ou d'une rangée Ri sont en contact (densité d'occupation maximale). Toutefois, la fixation d'un intervalle libre, même d'une fente mince (par exemple au plus égal à 1 mm en largeur), entre deux éléments 2 voisins peut contribuer favorablement à une circulation d'air autour desdits éléments 2, et donc à leur régulation thermique, sans compromettre la densité de stockage énergétique du module 1.

Par ailleurs, une structure ajourée, d'une part, des barreaux 8' des premiers moyens de calage 8 en forme d'échelles ou de cadres à traverses et, d'autre part, de la plaque formant le second moyen de calage 10, ainsi qu'une hauteur des parois de compartimentation 5 inférieure à celle des barrettes 2" favorise également une circulation d'air dans une batterie 20 renfermant un ou plusieurs modules de batterie 1.

En outre, en vue de garantir simultanément un blocage en position sûr, malgré les tolérances de fabrication, notamment dans la direction des axes longitudinaux AL des éléments de batterie 2, de manière isolée ou en barrettes 2", et simultanément assurer la nécessaire connexion électrique entre ces éléments 2, le module 1 peut comprendre des bandes flexibles 14, en un matériau élastiquement compressible, conducteur thermique et isolant électrique, reposant sur la paroi de fond 6 dans les différents logements allongés 7, avantageusement au niveau de surfaces profilées proéminentes 6' formées dans le fond desdits logements 7, et sur lesquels viennent en appui, par leurs bornes de connexion 2' correspondantes, et le cas échéant sous pression de seconds moyens de calage 10, les éléments de batterie 2 de la rangée Ri concernée. Lesdites bandes flexibles 14 s'étendent avantageusement, en une ou plusieurs parties, sur toute la longueur desdits logements 7 et reçoivent des lignes ou des bandes 15 (au moins sous forme de portions discontinues) électriquement conductrices, au niveau de leurs surfaces venant en contact avec lesdites bornes 2'. Ces bandes ou lignes conductrices 15 peuvent être posées sur ou intégrées aux bandes flexibles 14 (par exemple en silicone) et font partie des moyens 15" de raccordement électrique des éléments de batterie 2 du module 1.

Ainsi, en plus de la régulation thermique par circulation d'air, les éléments 2 sont ainsi soumis à une régulation thermique par conduction à travers les bandes 14 et 15 (les bandes 15 étant avantageusement métalliques, donc bonnes conductrices thermiques également), entre leurs extrémités inférieures et la paroi de fond 6 (ce second mode de régulation est d'autant plus efficace que la conduction thermique interne des éléments 2 selon leur axe AL est élevée).

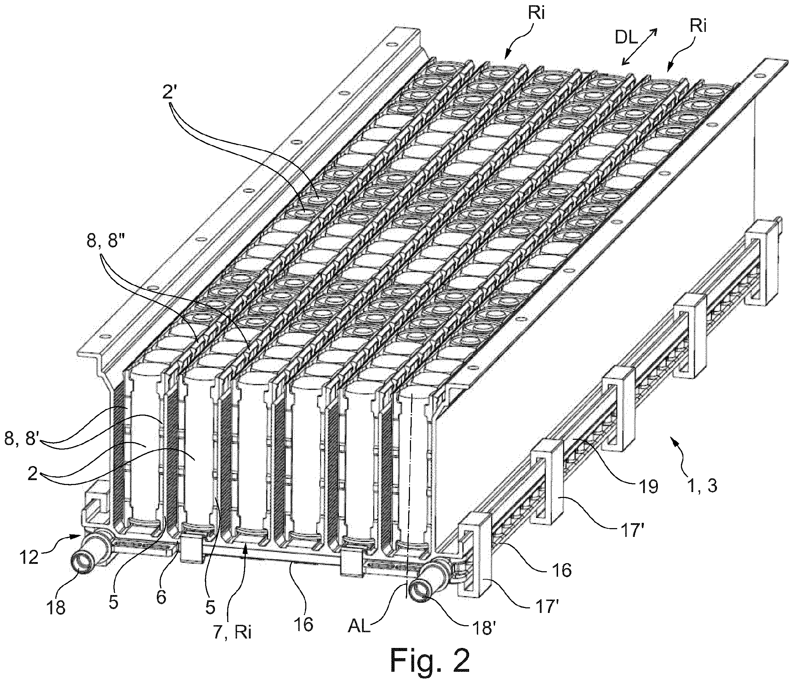

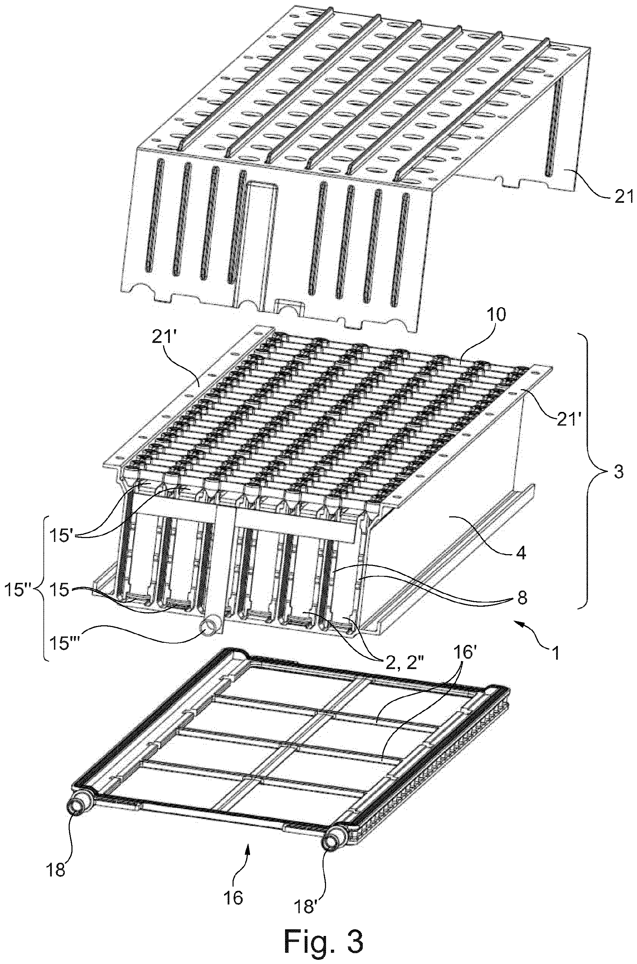

De plus, lesdites bandes ou lignes 15 font avantageusement partie d'un dispositif 15" d'interconnexion électrique des différents éléments 2 sous la forme d'un jeu de barres inférieures 15 et supérieures 15' reliant entre eux des éléments 2 voisins pour les connecter en parallèle, ces groupes d'éléments 2 en parallèle d'une même rangée Ri étant eux-mêmes reliés en série ou en parallèle/série (voir disposition des éléments 2 dans les figures 2, 5, 7). Ce jeu de barres de connexion est lui-même relié au moyen de raccordement électrique 15'" du module de batterie 1 (voir figures 3, 4 et 5).

Plus précisément, la connexion électrique des éléments de batterie 2 d'un module 1 peut, par exemple, être organisée avantageusement sur trois niveaux différents, en fonction notamment du ratio tension/courant souhaité pour une construction de module 1 (nombre total d'éléments 2, longueur et nombre de logements 7 du corps support 4) donné.

Ainsi, un premier niveau de connexion électrique peut être réalisé entre les éléments de batterie 2 de l'alignement d'éléments 2 d'une barrette 2" : elle peut être du type parallèle, parallèle/série ou série en fonction des caractéristiques recherchées.

Un second niveau de connexion électrique peut être réalisé entre barrettes 2", adjacentes ou non, d'une rangée Ri d'éléments 2 montés de manière alignée et calée dans un logement allongé 7 du corps support 4.

Enfin, le troisième niveau de connexion électrique peut consister à relier les différentes rangées Ri entre elles et avec un connecteur commun 15‴ d'interfaçage et de raccordement avec l'extérieur propre au module 1 considéré.

Ces connexions électriques entre éléments 2 d'une barrette 2", entre barrettes 2" constituant une rangée Ri et entre rangées Ri d'un module 1 sont réalisées par combinaison des bandes ou de lignes conductrices inférieures 15 et des bandes conductrices supérieures 15', formant ensemble un réseau de connexion électrique structuré reliant les bornes 2' inférieures et supérieures de tous les éléments 2 aux terminaux de connexion ou connecteurs 15‴ du module 1, comme cela ressort notamment des figures 1, 5, 6, 12, 15B, 16A et 16B.

Préférentiellement, les différents moyens de calage en position des éléments de batterie 2 dans le module 1 présentent également l'ensemble des caractéristiques des moyens correspondants décrits et représentés dans la demande de brevet français n° 1874281 du 28 décembre 2018 au nom de la demanderesse.

Conformément à une variante constructive préférée de l'invention, à la fois compacte et efficace, illustrée notamment aux figures 2, 3, 4, 5 et 11, le moyen de régulation thermique 12 propre audit module 1 comprend une paroi 16, préférentiellement en un matériau isolant ou au moins faiblement conducteur thermique, rapportée sur la face externe de la paroi de fond 6 du corps support 4 et constituant par coopération avec cette dernière un double-fond 17 étanche, des moyens 18, 18' d'amenée et d'évacuation de liquide caloporteur 12 dans le volume intérieur du double-fond 17 étant intégrés à ladite paroi rapportée 16 ou formée par son assemblage avec la paroi de fond 6.

Préférentiellement le volume interne du double-fond 17 comprend un ou plusieurs chemin(s) de circulation du fluide caloporteur 12' entre un port d'entrée 18 et un port de sortie 18', ce(s) chemin(s) étant constitué(s) soit uniquement par des formations 16' intégrées à la paroi rapportée 16 du double-fond 17, soit par coopération de formations mutuellement complémentaires présentes sur la paroi de fond 6 et sur la paroi rapportée 16.

Les chemins de circulation peuvent notamment comprendre des conduits de circulation principaux 18" formés latéralement dans la continuité des ports 18 et 18', et éventuellement des chemins ou voies de circulation secondaires transversaux (non représentés spécifiquement), la circulation de fluide pouvant également se faire dans tout le volume du double-fond 17, lequel peut être compartimenté ou non transversalement.

Selon une caractéristique avantageuse de l'invention, le corps support profilé 4 comporte le long des côtés latéraux de la paroi de fond 6 des rebords 19 saillants vers l'extérieur et la paroi rapportée 16, constituant avec la paroi de fond 6 le double-fond 17, est solidarisée avec ledit corps support 4 au niveau desdits rebords 19, par exemple par des moyens de clippage 17', de vissage, ou d'assemblage mécanique analogue.

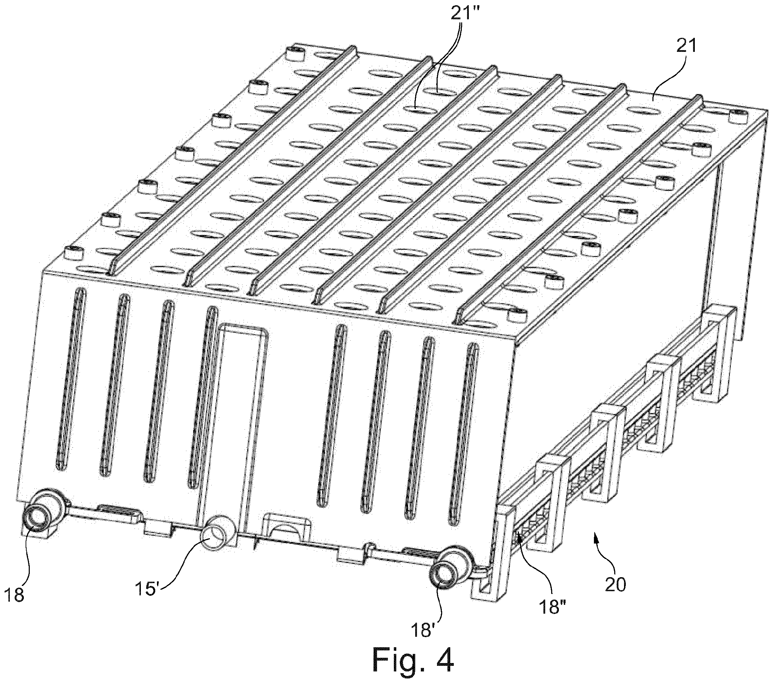

L'invention concerne également, comme le montrent les figures 4, 5, 6, 15, 16 et 17, une batterie pour véhicule motorisé, notamment pour véhicule automobile hybride ou électrique, caractérisé en ce qu'il comprend au moins un module de batterie 1 tel que décrit précédemment.

La batterie 20 peut, comme cela ressort des figures précitées, être déclinée selon une multitude de formats (taille, puissance) dépendant de l'utilisation envisagée (batterie d'appoint, source principale d'énergie, batterie de sauvegarde, ...) et de la puissance et/ou de l'énergie requise(s).

Selon un premier mode de réalisation de l'invention, ressortant des figures 4 à 6, la batterie 20 peut comprendre un unique module de batterie 1, préférentiellement pourvu d'un moyen de régulation thermique 12 propre, ainsi qu'un couvercle 21, avantageusement ajouré et préférentiellement en un matériau isolant électrique, tel que du plastique ou analogue, dont les parois forment un U et sont configurées pour recouvrir les faces ouvertes des logements allongés 7, du corps support 4 du module 1, de manière à constituer avec le contenant 3 du module 1 une enveloppe extérieure continue et une enceinte fermée dans laquelle les éléments de batterie 2 sont maintenus avec blocage en position mécaniquement.

Le couvercle 21 peut notamment être fixé sur des rebords renforcés ou des ailes d'extrémité saillantes 21' des parois latérales extérieures du corps support 4.

Ce couvercle 21 peut être réalisé d'une seule pièce ou être constitué de plusieurs parties (par exemple deux ou trois parties) assemblées entre elles et avec le corps support 4.

Ce couvercle 21, fixé par vissage ou clippage par exemple au niveau d'ailes latérales de rebords supérieurs 21' du corps support 4, peut participer au blocage en position du ou des second(s) élément(s) de calage 10 sur les barrettes 2" , par exemple par l'intermédiaire de zones déformées ou renfoncées 21" venant en engagement coopérant avec des projections 10' au niveau de leurs extrémités creuses opposées à leurs extrémités coniques fournissant les surfaces biseautées engageant les sites ou découpes 11.

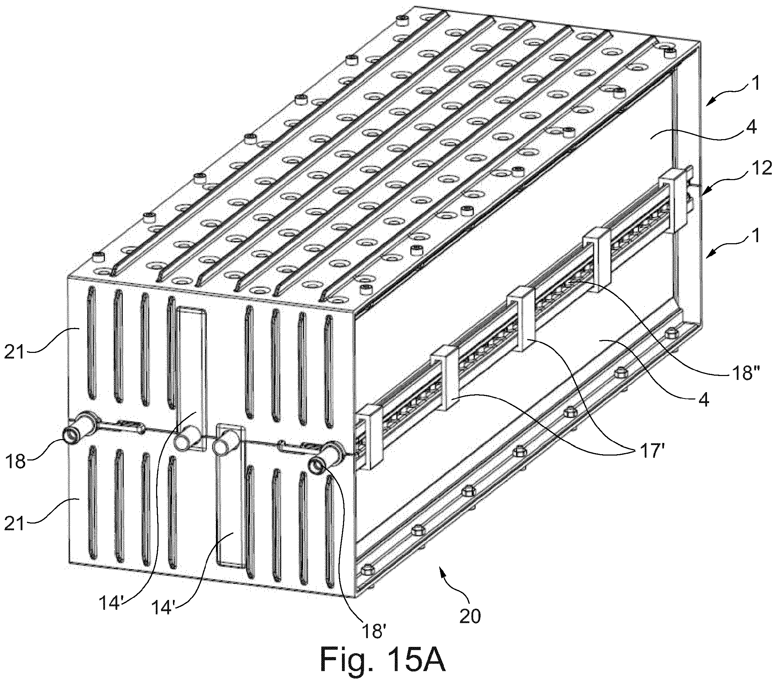

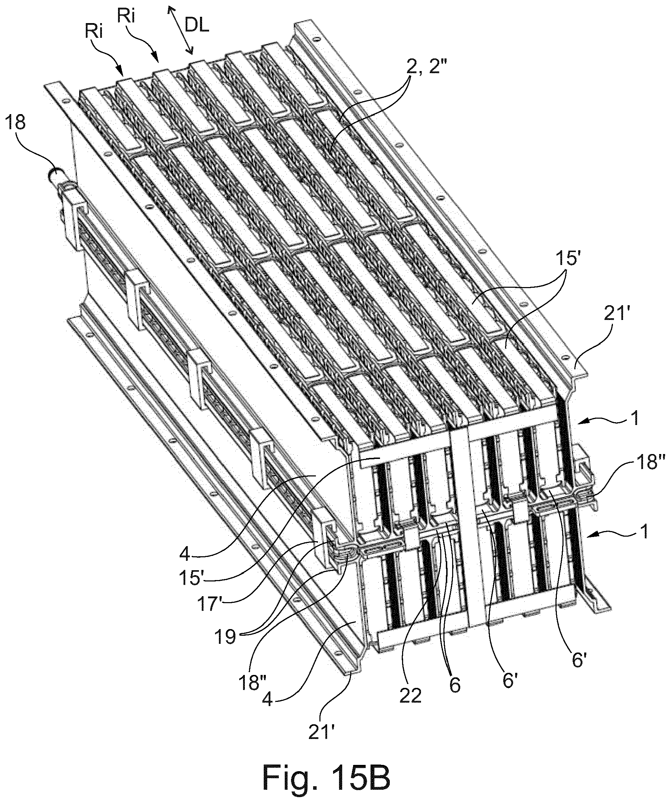

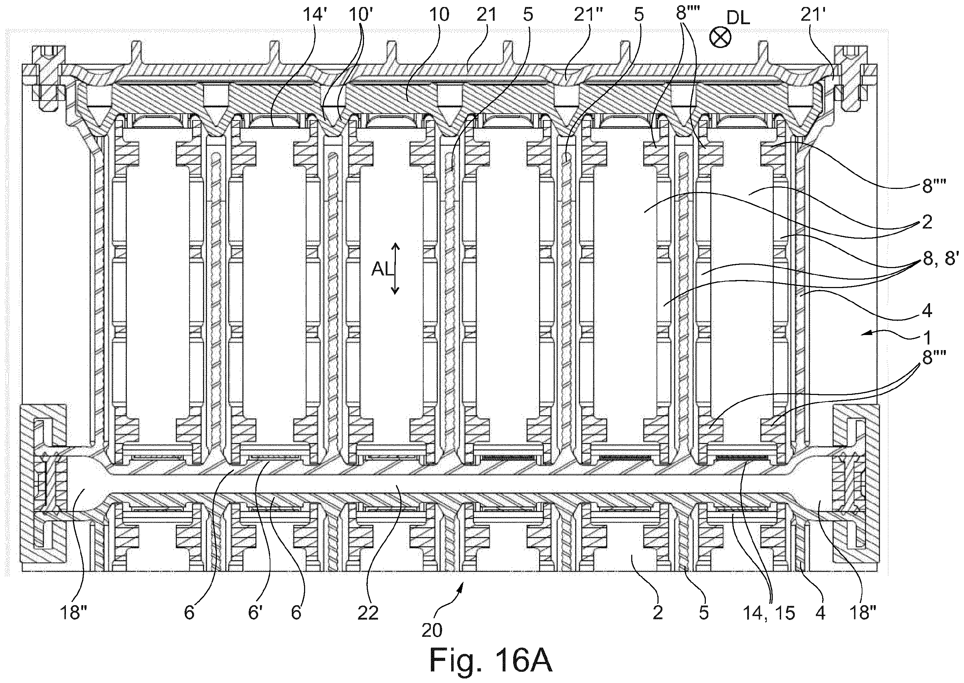

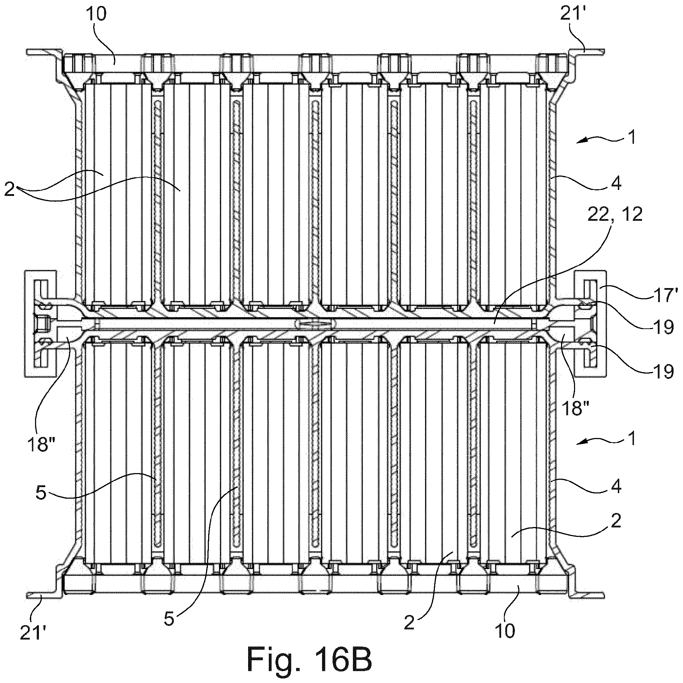

Selon un deuxième mode de réalisation de l'invention, ressortant des figures 15 et 16, la batterie 20 peut comprendre deux modules de batterie 1 assemblés entre eux avec mise en regard espacée de leurs parois de fond 6 respectives et création d'un volume 22 de circulation de fluide caloporteur 12' entre elles formant un moyen de régulation thermique 12 commun avec des ports d'entrée et de sortie 18, 18', ainsi qu'avantageusement deux couvercles 21 dont les parois de chacun forment un U et sont configurées pour recouvrir les faces ouvertes des logements allongés 7 d'un des deux corps supports 1, de manière à constituer avec les deux contenants 3 deux enceintes fermées et mutuellement accolées dans lesquelles les éléments de batterie sont maintenus en blocage en position mécaniquement.

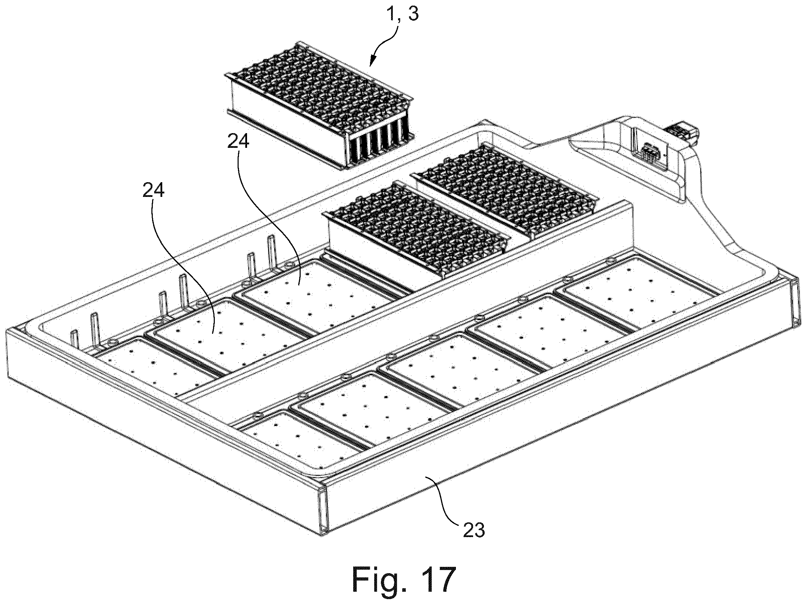

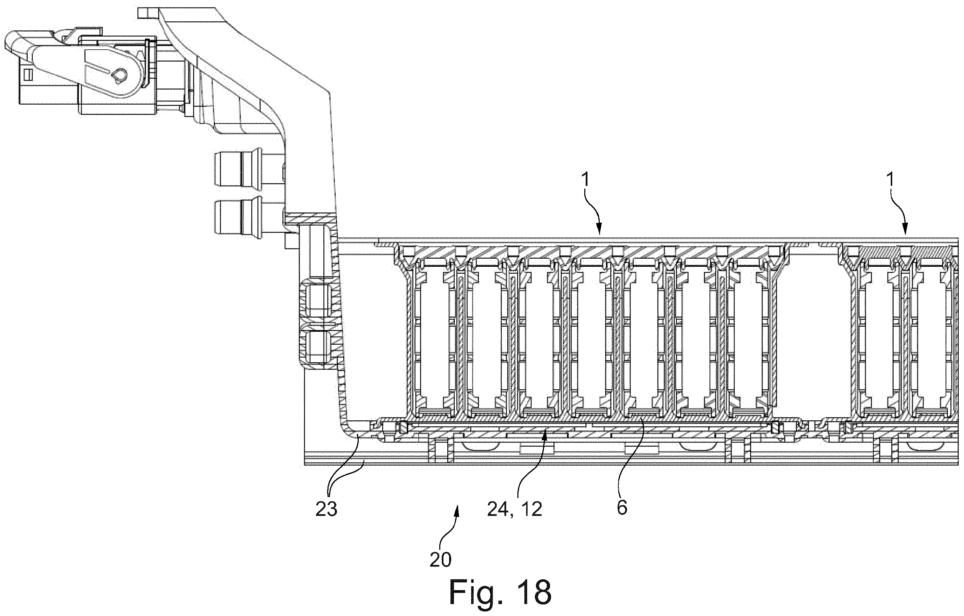

Enfin, selon un troisième mode de réalisation de l'invention, illustré sur les figures 17 et 18, la batterie 20 peut comprendre au moins deux, préférentiellement plusieurs, modules de batterie 1 disposés dans une première partie de boitier formant bac 23 et présentant des emplacements de réception (24) pour lesdits modules 1, chacun desdits emplacements 24 comportant un moyen de régulation thermique 12 soit sous la forme d'une portion de paroi renforcée formant avec la paroi de fond 6 du corps support 4 un double fond, soit sous la forme d'une surface d'appui pour la paroi de fond 6 du corps support 4 d'un module de batterie 1, régulée en température, une seconde partie de boitier formant couvercle (non représenté) étant prévue pour réaliser par coopération avec la première partie 23 précitée, un boitier fermé, intégrant des moyens de régulation thermique et des moyens de connexion électrique des différents modules 1 entre eux.

Les moyens de régulation thermique intégrés dans le bac 23 et, le cas échéant, dans le couvercle du boitier, peuvent par exemple correspondre aux moyens de régulation décrits et représentés plus en détail dans les demandes de brevets français n° 1853129, n° 1853131 et n° 1856167 au nom de la demanderesse.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Module (1) de batterie électrique, en particulier de batterie pour véhicule automobile, comprenant une pluralité d'accumulateurs individuels (2) sous la forme d'éléments ou de cellules de batterie de constitution allongée et préférentiellement cylindrique,
ces éléments de batterie (2), qui présentent une conductivité thermique plus élevée selon leur direction longitudinale que leur direction radiale, étant agencés en rangées (Ri) parallèles, reliés électriquement entre eux et aux bornes du module (1) et montés dans un contenant (3) faisant partie dudit module (1),
module de batterie (1) **caractérisé en ce que** le contenant (3) comprend :
d'une part, au moins un corps support (4) en un matériau rigide et bon conducteur thermique, en particulier un matériau métallique tel que l'aluminium ou un alliage de ce dernier, ce corps support (4) se présentant sous la forme d'une pièce profilée à section transversale en forme de peigne, avec une pluralité de parois de compartimentation (5) mutuellement parallèles et régulièrement espacées entre elles et avec une paroi de fond (6) reliant lesdites parois de compartimentation (5) à leurs bases, chaque paire de parois de compartimentation (5) voisines délimitant avec la paroi de fond (6) une rainure profilée (7) formant un logement allongé configuré pour recevoir de manière non ajustée une rangée (Ri) d'éléments de batterie (2) avec leurs axes longitudinaux (AL) perpendiculaires à la paroi de fond (6) et en appui sur cette dernière, et,
d'autre part, au moins des premiers moyens (8) de calage mécanique, rapportés ou intégrés s'étendant au moins partiellement entre deux éléments de batterie (2) voisins, ce pour tous les éléments (2) d'une même rangée (Ri), de manière à limiter, préférentiellement bloquer, les mouvements desdits éléments (2) au moins dans la direction longitudinale (DL) du logement (7) les recevant et à écarter lesdits éléments (2) des deux parois de compartimentation (5) définissant le logement allongé les recevant.

2. Module de batterie selon la revendication 1, **caractérisé en ce que** les premiers moyens de calage (8) consistent soit en des pièces rapportées d'espacement intercalées entre les faces des deux parois de compartimentation (5) opposées de chaque logement (7) et les éléments de batterie (2) reçus dans ce logement (7), soit en des formations proéminentes, profilées ou non, faisant saillie par rapport aux faces desdites parois (5), ces pièces ou ces formations (8) étant configurées et positionnées pour constituer des interstices entre les éléments de batterie (2) et lesdites faces (5') des parois (5), avantageusement pour assurer un maintien des éléments de batterie (2) à distance des faces (5') respectivement concernées, préférentiellement pour réaliser un blocage en position avec centrage dans le logement (7) concerné.

3. Module de batterie selon la revendication 1 ou 2, **caractérisé en ce que** les premiers moyens de calage (8) consistent, pour chaque logement (7), en des pièces rapportées en forme d'échelles, ou de cadres pourvus de traverses, dont les barreaux ou traverses (8') constituent ou portent des éléments de butée et d'espacement positionnés respectivement entre deux éléments de batterie (2) voisins et faisant état de zones (8"") de contact linéaires ou surfaciques avec ces derniers, ces pièces de calage (8) étant disposées entre les faces (5') des parois de compartimentation (5) et la rangée (Ri) d'éléments de batterie (2) concernée, de part et d'autre de cette dernière, chaque paire de pièces de calage (8) opposées formant ainsi une cage emprisonnant une partie au moins des éléments de batterie (2) de la rangée (Ri) reçue dans le logement profilé (7) concerné.

4. Module de batterie selon la revendication 3, **caractérisé en ce que** les longerons (8") des pièces de calage (8) en forme d'échelles ou de cadres présentent des bords (8‴) configurés pour venir en contact, entre deux barreaux ou traverses, avec les extrémités supérieure et inférieure des éléments de batterie cylindriques (2), le cas échéant sous pression et/ou avec déformation élastique, ce au niveau de portions de bords latéraux desdites extrémités, les éléments de batterie (2) emprisonnés entre deux pièces de calage (8) formant ainsi avec elles une barrette (2").

5. Module de batterie selon la revendication 1 ou 2, **caractérisé en ce que** les premiers moyens de calage (8) consistent en des formations saillantes, telles que des bossages, des crêtes, des picots ou analogues, faisant partie intégrante des faces des parois de compartimentation (5) ou de pièces montées sur ces dernières, par exemple par emboîtement.

6. Module de batterie selon l'une quelconque des revendications 1 à 5, **caractérisé en ce que** le contenant (3) comprend des seconds moyens de calage (10) configurés et arrangés pour bloquer les éléments de batterie contre la paroi de fond (6), ces seconds moyens de calage (10) se présentant avantageusement sous la forme d'un panneau à structure grillagée s'étendant par-dessus les logements (7) allongés du corps support (4) et les différentes rangées (Ri) d'éléments de batterie (2) et venant, le cas échéant, en engagement mécanique avec les premiers moyens de calage (8), au-dessus des parois de compartimentation (5), pour assurer leur positionnement fixe en partie supérieure des logements (7) et assurer leur coopération intime avec lesdits éléments de batterie (2).

7. Module de batterie selon les revendications 4 et 6, **caractérisé en ce que** le panneau à structure grillagée (10) comporte des formations (10') coniques, biseautées ou en forme de coins configurées pour venir s'insérer entre les longerons supérieurs (8") de premières pièces de calage (8) en forme d'échelles ou de cadres disposées de part et d'autre d'une paroi de compartimentation donnée (5), au niveau de sites (11) de formes complémentaires desdits longerons (8"), de sorte à solliciter chacun desdits longerons (8") et les barreaux (8') pour venir en contact avec les éléments de batterie (2) respectivement concernés et pris en sandwich entre deux premières pièces de calage (8) mutuellement opposées.

8. Module de batterie selon l'une quelconque des revendications 1 à 7, **caractérisé en ce que** la paroi de fond (6) est soumise, préférentiellement sensiblement sur l'ensemble de sa surface, à l'action d'un moyen (12) de régulation thermique, par exemple du type à circulation de fluide caloporteur (12'), ledit moyen de régulation thermique (12) étant soit propre audit module (1) considéré, soit partagé entre au moins deux modules (1), ou encore appartenant à un ensemble de moyens de régulation thermique associés à plusieurs modules (1).

9. Module de batterie selon l'une quelconque des revendications 1 à 8, **caractérisé en ce que** les parois de compartimentation (5) présentent, sur leur deux faces (5'), une structure de surface (5") non plane, par exemple pourvue d'un motif de nervures/rainures ou d'ondulations profilées, les zones (13) de jonction desdites parois de compartimentation (5) avec la paroi de fond (6) présentant avantageusement une section évasée en direction de cette dernière, fournissant des surfaces biaisées ou biseautées d'appui latéral et de centrage pour les premiers moyens de calage (8) et/ou les éléments de batterie (2).

10. Module de batterie selon l'une quelconque des revendications 1 à 9, **caractérisé en ce qu'**il comprend des bandes flexibles (14), en un matériau élastiquement compressible, conducteur thermique et isolant électrique, reposant sur la paroi de fond (6) dans les différents logements allongés (7), avantageusement au niveau de surfaces profilées proéminentes (6') formées dans le fond desdits logements (7), et sur lesquels viennent en appui, par leurs bornes de connexion (2') correspondantes, et le cas échéant sous pression de seconds moyens de calage (10), les éléments de batterie (2) de la rangée (Ri) concernée, lesdites bandes flexibles (14) s'étendant avantageusement, en une ou plusieurs parties, sur toute la longueur desdits logements (7) et recevant des lignes ou des bandes (15) électriquement conductrices, au niveau de leurs surfaces venant en contact avec lesdites bornes (2'), ces bandes ou lignes conductrices (15) étant posées sur ou intégrées aux bandes flexibles (14) et faisant partie des moyens (15") de raccordement électrique des éléments de batterie (2) du module (1).

11. Module de batterie selon la revendication 8, ou l'une quelconque des revendications 9 et 10 pour autant qu'elles se rattachent à la revendication 8, **caractérisé en ce que** le moyen de régulation thermique (12) propre audit module (1) comprend une paroi (16), préférentiellement en un matériau isolant ou au moins faiblement conducteur thermique, rapportée sur la face externe de la paroi de fond (6) du corps support (4) et constituant par coopération avec cette dernière un double-fond (17) étanche, des moyens (18, 18') d'amenée et d'évacuation de liquide caloporteur (12) dans le volume intérieur du double-fond (17) étant intégrés à ladite paroi rapportée (16) ou formée par son assemblage avec la paroi de fond (6).

12. Module de batterie selon la revendication 11, **caractérisé en ce que** le volume interne du double-fond (17) comprend un ou plusieurs chemin(s) de circulation du fluide caloporteur (12') entre un port d'entrée (18) et un port de sortie (18'), ce(s) chemin(s) étant constitué(s) soit uniquement par des formations (16') intégrées à la paroi rapportée (16) du double-fond (17), soit par coopération de formations mutuellement complémentaires présentes sur la paroi de fond (6) et sur la paroi rapportée (16).

13. Module de batterie selon l'une quelconque des revendications 11 et 12, **caractérisé en ce que** le corps support profilé (4) comporte le long des côtés latéraux de la paroi de fond (6) des rebords (19) saillants vers l'extérieur et **en ce que** la paroi rapportée (16), constituant avec la paroi de fond (6) le double-fond (17), est solidarisée avec ledit corps support (4) au niveau desdits rebords (19), par exemple par des moyens de clippage (17'), de vissage, ou d'assemblage mécanique analogue.

14. Batterie (20) pour véhicule motorisé, notamment pour véhicule automobile hybride ou électrique, **caractérisé en ce qu'**il comprend au moins un module de batterie (1) selon l'une quelconque des revendications 1 à 10.

15. Batterie selon la revendication 14, **caractérisée en ce qu'**elle comprend un unique module de batterie (1), préférentiellement pourvu d'un moyen de régulation thermique (12) selon l'une des revendications 11 à 13, ainsi qu'un couvercle (21), avantageusement ajouré et préférentiellement en un matériau isolant électrique, tel que du plastique ou analogue, dont les parois forment un U et sont configurées pour recouvrir les faces ouvertes des logements allongés (7) du corps support (4) du module (1), de manière à constituer avec le contenant (3) une enveloppe extérieure continue et une enceinte fermée dans laquelle les éléments de batterie (2) sont maintenus avec blocage en position mécaniquement.

16. Batterie selon la revendication 14, **caractérisée en ce qu'**elle comprend deux modules de batterie (1) assemblés entre eux avec mise en regard espacée de leurs parois de fond (6) respectives et création d'un volume (22) de circulation de fluide caloporteur (12') entre elles formant un moyen de régulation thermique (12) commun avec des ports d'entrée et de sortie (18, 18'), ainsi qu'avantageusement deux couvercles (21) dont les parois de chacun forment un U et sont configurées pour recouvrir les faces ouvertes des logements allongés (7) d'un des deux corps supports (1), de manière à constituer avec les deux contenants (3) deux enceintes fermées et mutuellement accolées dans lesquelles les éléments de batterie sont maintenus en blocage en position mécaniquement.

17. Batterie selon la revendication 14, **caractérisée en ce qu'**elle comprend au moins deux, préférentiellement plusieurs, modules de batterie (1) disposés dans une première partie de boitier formant bac (23) et présentant des emplacements de réception (24) pour lesdits modules (1), chacun desdits emplacements (24) comportant un moyen de régulation thermique (12) soit sous la forme d'une portion de paroi renforcée formant avec la paroi de fond (6) du corps support (4) un double fond, soit sous la forme d'une surface d'appui pour la paroi de fond (6) du corps support (4) d'un module de batterie (1), régulée en température, une seconde partie de boitier formant couvercle étant prévue pour réaliser par coopération avec la première partie (23) précitée, un boitier fermé, intégrant des moyens de régulation thermique et des moyens de connexion électrique des différents modules (1) entre eux.

## Patentansprüche

1. Elektrisches Batteriemodul (1), insbesondere Batteriemodul für ein Kraftfahrzeug, welches mehrere einzelne Akkumulatoren (2) in Form von Batterieelementen oder -zellen von länglicher und vorzugsweise zylindrischer Gestalt umfasst,
wobei diese Batterieelemente (2), die entlang ihrer Längsrichtung eine höhere Wärmeleitfähigkeit als in ihrer radialen Richtung aufweisen, in parallelen Reihen (Ri) angeordnet, elektrisch miteinander und mit den Anschlussklemmen des Moduls (1) verbunden und in einem Behälter (3), der Teil des Moduls (1) ist, angeordnet sind,
wobei das Batteriemodul (1) **dadurch gekennzeichnet ist, dass** der Behälter (3) umfasst:
einerseits mindestens einen Stützkörper (4) aus einem steifen und gut wärmeleitenden Material, insbesondere einem metallischen Material wie etwa Aluminium oder einer Legierung des Letzteren, wobei dieser Stützkörper (4) in der Form eines Profilteils mit einem kammförmigen Querschnitt ausgebildet ist, mit mehreren zueinander parallelen und gleichmäßig voneinander beabstandeten Trennwänden (5) und mit einer Bodenwand (6), die diese Trennwände (5) an ihren unteren Enden verbindet, wobei jedes Paar benachbarter Trennwände (5) mit der Bodenwand (6) eine profilierte Nut (7) begrenzt, die einen länglichen Aufnahmeraum bildet, der dazu ausgebildet ist, eine Reihe (Ri) von Batterieelementen (2) unjustiert aufzunehmen, so dass ihre Längsachsen (AL) senkrecht zur Bodenwand (6) sind und sie auf der Letzteren aufliegen, und
andererseits mindestens erste Mittel (8) zur mechanischen Verkeilung, angesetzt oder integriert, die sich wenigstens teilweise zwischen zwei benachbarten Batterieelementen (2) erstrecken, und zwar für alle Elemente (2) derselben Reihe (Ri), so dass sie die Bewegungen der Elemente (2) wenigstens in der Längsrichtung (DL) des sie aufnehmenden Aufnahmeraumes (7) begrenzen und vorzugsweise blockieren und dass sie die Elemente (2) von den zwei Trennwänden (5), die den sie aufnehmenden Aufnahmeraum definieren, auf Abstand halten.

2. Batteriemodul nach Anspruch 1, **dadurch gekennzeichnet, dass** die ersten Verkeilungsmittel (8) entweder aus angesetzten Abstandsstücken bestehen, die zwischen den Seiten der zwei einander gegenüberliegenden Trennwände (5) jedes Aufnahmeraumes (7) und den in diesem Aufnahmeraum (7) aufgenommenen Batterieelementen (2) eingesetzt sind, oder aus profilierten oder nicht profilierten erhabenen Gebilden, die bezüglich der Seiten der Wände (5) vorstehen, wobei diese Abstandsstücke oder diese Gebilde (8) so ausgebildet und positioniert sind, dass Zwischenräume zwischen den Batterieelementen (2) und den Seiten (5') der Wände (5) gebildet werden, vorteilhafterweise um ein Halten der Batterieelemente (2) auf Abstand von den betreffenden jeweiligen Seiten (5') sicherzustellen, vorzugsweise um eine Fixierung in ihrer Position mit Zentrierung in dem betreffenden Aufnahmeraum (7) durchzuführen.

3. Batteriemodul nach Anspruch 1 oder 2, **dadurch gekennzeichnet, dass** die ersten Verkeilungsmittel (8) für jeden Aufnahmeraum (7) aus angesetzten Teilen in der Form von Leitern oder von mit Querstreben versehenen Rahmen bestehen, deren Sprossen oder Querstreben (8') Anschlag- und Abstandselemente bilden oder tragen, die jeweils zwischen zwei benachbarten Batterieelementen (2) positioniert sind und mit diesen Letzteren linienförmige oder flächige Kontaktbereiche (8ʺʺ) bilden, wobei diese Verkeilungsstücke (8) zwischen den Seiten (5') der Trennwände (5) und der betreffenden Reihe (Ri) von Batterieelementen (2) angeordnet sind, beiderseits dieser Letzteren, wobei jedes Paar von einander gegenüberliegenden Verkeilungsstücken (8) somit einen Käfig bildet, der wenigstens einen Teil der Batterieelemente (2) der Reihe (Ri) umschließt, die in dem betreffenden profilierten Aufnahmeraum (7) aufgenommen ist.

4. Batteriemodul nach Anspruch 3, **dadurch gekennzeichnet, dass** die Längsholme (8") der Verkeilungsstücke (8) in Form von Leitern oder von Rahmen Ränder (8"') aufweisen, die dafür ausgebildet sind, zwischen zwei Sprossen oder Querstreben mit dem oberen und dem unteren Ende der zylindrischen Batterieelemente (2) in Kontakt zu kommen, gegebenenfalls unter Druck und/oder mit elastischer Verformung, und zwar an Abschnitten von seitlichen Rändern dieser Enden, wobei die zwischen zwei Verkeilungsstücken (8) eingeschlossenen Batterieelemente (2) somit mit diesen einen Steg (2") bilden

5. Batteriemodul nach Anspruch 1 oder 2, **dadurch gekennzeichnet, dass** die ersten Verkeilungsmittel (8) aus vorstehenden Gebilden bestehen, wie etwa Höckern, Kämmen, Spitzen oder dergleichen, die einen integralen Bestandteil der Seiten der Trennwände (5) oder von Teilen, die zum Beispiel durch Zusammenstecken an diesen Letzteren angebracht sind, bilden.

6. Batteriemodul nach einem der Ansprüche 1 bis 5, **dadurch gekennzeichnet, dass** der Behälter (3) zweite Verkeilungsmittel (10) umfasst, die dafür ausgebildet und eingerichtet sind, die Batterieelemente an der Bodenwand (6) zu blockieren, wobei diese zweiten Verkeilungsmittel (10) vorteilhafterweise die Form eines Paneels mit gitterförmiger Struktur aufweisen, das sich oberhalb der länglichen Aufnahmeräume (7) des Stützkörpers (4) und der verschiedenen Reihen (Ri) von Batterieelementen (2) erstreckt und gegebenenfalls mit den ersten Verkeilungsmitteln (8) oberhalb der Trennwände (5) in mechanischen Eingriff gelangt, um ihre feste Positionierung im oberen Teil der Aufnahmeräume (7) sicherzustellen und ihr enges Zusammenwirken mit den Batterieelementen (2) sicherzustellen.

7. Batteriemodul nach den Ansprüchen 4 und 6, **dadurch gekennzeichnet, dass** das Paneel mit gitterförmiger Struktur (10) konische Gebilde (10') aufweist, die abgeschrägt sind oder die Form von Ecken haben und dafür ausgebildet sind, zwischen den Längsholmen (8") von ersten Verkeilungsstücken (8) in Form von Leitern oder von Rahmen eingesetzt zu werden, die beiderseits einer gegebenen Trennwand (5) angeordnet sind, an Stellen (11) mit zu den Längsholmen (8") komplementären Formen, derart, dass sie auf jeden der Längsholme (8") und die Sprossen (8') Kraft ausüben, damit sie in Kontakt mit den betreffenden jeweiligen Batterieelementen (2) kommen, die sandwichartig zwischen zwei ersten Verkeilungsstücken (8), die einander gegenüberliegen, aufgenommen sind.

8. Batteriemodul nach einem der Ansprüche 1 bis 7, **dadurch gekennzeichnet, dass** die Bodenwand (6), vorzugsweise im Wesentlichen auf ihrer gesamten Fläche, der Einwirkung eines Mittels (12) zur Wärmeregulierung ausgesetzt ist, zum Beispiel vom Typ mit Zirkulation eines Wärmeträgerfluids (12'), wobei das Mittel zur Wärmeregulierung (12) entweder nur zu dem betreffenden Modul (1) gehört oder von mindestens zwei Modulen (1) geteilt wird oder auch zu einer Gesamtheit von Mitteln zur Wärmeregulierung gehört, die mehreren Modulen (1) zugeordnet sind.

9. Batteriemodul nach einem der Ansprüche 1 bis 8, **dadurch gekennzeichnet, dass** die Trennwände (5) auf ihren zwei Seiten (5') eine nicht ebene Oberflächenstruktur (5") aufweisen, die zum Beispiel mit einem Muster von Rippen/Nuten oder von profilierten Wellen versehen ist, wobei die Verbindungsbereiche (13) der Trennwände (5) mit der Bodenwand (6) vorteilhafterweise einen in Richtung dieser Letzteren aufgeweiteten Querschnitt aufweisen, der einseitig oder zweiseitig abgeschrägte Flächen zur seitlichen Abstützung und zur Zentrierung für die ersten Verkeilungsmittel (8) und/oder die Batterieelemente (2) liefert.

10. Batteriemodul nach einem der Ansprüche 1 bis 9, **dadurch gekennzeichnet, dass** es flexible Bänder (14) aus einem elastisch komprimierbaren Material umfasst, die wärmeleitfähig und elektrisch isolierend sind und auf der Bodenwand (6) in den verschiedenen länglichen Aufnahmeräumen (7) ruhen, vorteilhafterweise an erhabenen profilierten Flächen (6'), die im Boden der Aufnahmeräume (7) ausgebildet sind und auf denen die Batterieelemente (2) der betreffenden Reihe (Ri) mit ihren entsprechenden Anschlussklemmen (2') und gegebenenfalls unter Druck von zweiten Verkeilungsmitteln (10) zur Anlage kommen, wobei die flexiblen Bänder (14) sich vorteilhafterweise in einem oder mehreren Teilen über die gesamte Länge der Aufnahmeräume (7) erstrecken und an ihren mit den Anschlussklemmen (2') in Kontakt kommenden Flächen elektrisch leitfähige Leitungen oder Bänder (15) aufnehmen, wobei diese leitfähigen Bänder oder Leitungen (15) auf den flexiblen Bändern (14) verlegt oder in diese integriert sind und Bestandteil der Mittel (15") zum elektrischen Anschluss der Batterieelemente (2) des Moduls (1) sind.

11. Batteriemodul nach Anspruch 8 oder nach einem der Ansprüche 9 und 10, sofern sie von Anspruch 8 abhängig sind, **dadurch gekennzeichnet, dass** das Mittel zur Wärmeregulierung (12), das zum Modul (1) gehört, eine Wand (16) umfasst, vorzugsweise aus einem wärmeisolierenden oder wenigstens schwach wärmeleitfähigen Material, die an die Außenseite der Bodenwand (6) des Stützkörpers (4) angesetzt ist und durch Zusammenwirken mit dieser Letzteren einen dichten Doppelboden (17) bildet, wobei Mittel (18, 18') zur Zuführung und Ableitung von Wärmeträgerfluid (12) in das bzw. aus dem inneren Volumen des Doppelbodens (17) in die angesetzte oder durch ihren Zusammenbau mit der Bodenwand (6) gebildete Wand (16) integriert sind.

12. Batteriemodul nach Anspruch 11, **dadurch gekennzeichnet, dass** das innere Volumen des Doppelbodens (17) einen oder mehrere Strömungsweg(e) des Wärmeträgerfluids (12') zwischen einem Eingangsanschluss (18) und einem Ausgangsanschluss (18') umfasst, wobei diese(r) Weg(e) entweder ausschließlich aus Gebilden (16') besteht (bestehen), die in die angesetzte Wand (16) des Doppelbodens (17) integriert sind, oder durch Zusammenwirken von zueinander komplementären Gebilden gebildet wird (werden), die auf der Bodenwand (6) und auf der angesetzten Wand (16) vorhanden sind.

13. Batteriemodul nach einem der Ansprüche 11 und 12, **dadurch gekennzeichnet, dass** der profilierte Stützkörper (4) entlang der Längsseiten der Bodenwand (6) nach außen vorstehende Randleisten (19) aufweist, und dadurch, dass die angesetzte Wand (16), die mit der Bodenwand (6) den Doppelboden (17) bildet, mit dem Stützkörper (4) an diesen Randleisten (19) fest verbunden ist, zum Beispiel durch Rastmittel (17'), Verschraubungsmittel oder analoge Mittel zum mechanischen Zusammenbau.

14. Batterie (20) für ein motorisiertes Fahrzeug, insbesondere für ein hybrides oder elektrisches Kraftfahrzeug, **dadurch gekennzeichnet, dass** es wenigstens ein Batteriemodul (1) nach einem der Ansprüche 1 bis 10 umfasst.

15. Batterie nach Anspruch 14, **dadurch gekennzeichnet, dass** sie ein einziges Batteriemodul (1) umfasst, das vorzugsweise mit einem Mittel zur Wärmeregulierung (12) nach einem der Ansprüche 11 bis 13 versehen ist, sowie mit einem Deckel (21), der vorteilhafterweise durchbrochen ist und vorzugsweise aus einem elektrisch isolierenden Material wie Kunststoff oder dergleichen besteht, und dessen Wände ein "U" bilden und dazu ausgebildet sind, die offenen Seiten der länglichen Aufnahmeräume (7) des Stützkörpers (4) des Moduls (1) zu bedecken, um so mit dem Behälter (3) eine zusammenhängende äußere Hülle und einen geschlossenen Raum zu bilden, in welchem die Batterieelemente (2) mechanisch in ihrer Position fixiert gehalten werden.

16. Batterie nach Anspruch 14, **dadurch gekennzeichnet, dass** sie zwei Batteriemodule (1) umfasst, die so zusammengebaut sind, dass ihre jeweiligen Bodenwände (6) einander gegenüberliegen und beabstandet sind, und mit Erzeugung eines Volumens (22) zur Zirkulation von Wärmeträgerfluid (12') zwischen ihnen, das ein gemeinsames Mittel zur Wärmeregulierung (12) bildet, mit Eingangs- und Ausgangsanschluss (18, 18'), sowie vorteilhafterweise mit zwei Deckeln (21), deren Wände jeweils ein "U" bilden und dazu ausgebildet sind, die offenen Seiten der länglichen Aufnahmeräume (7) eines der beiden Stützkörper (1) zu bedecken, um so mit den zwei Behältern (3) zwei geschlossene und aneinander angrenzende Räume zu bilden, in den die Batterieelemente mechanisch in ihrer Position fixiert gehalten werden.

17. Batterie nach Anspruch 14, **dadurch gekennzeichnet, dass** sie mindestens zwei, vorzugsweise mehrere Batteriemodule (1) umfasst, die in einem ersten Gehäuseteil angeordnet sind, das eine Wanne (23) bildet und mehrere Aufnahmeplätze (24) für die Module (1) aufweist, wobei jeder der Aufnahmeplätze (24) ein Mittel zur Wärmeregulierung (12) aufweist, entweder in Form eines verstärkten Wandabschnitts, der mit der Bodenwand (6) des Stützkörpers (4) einen Doppelboden bildet, oder in Form einer temperaturgeregelten Auflagefläche für die Bodenwand (6) des Stützkörpers (4) eines Batteriemoduls (1), wobei ein zweiter Gehäuseteil, der einen Deckel bildet, dazu vorgesehen ist, durch Zusammenwirken mit dem oben erwähnten ersten Teil (23) ein geschlossenes Gehäuse zu bilden, in das Mittel zur Wärmeregulierung und Mittel zur elektrischen Verbindung der verschiedenen Module (1) miteinander integriert sind.

## Claims

1. Electric battery module (1), in particular motor vehicle battery module, comprising a plurality of individual accumulators (2) in the form of battery elements or cells of elongate, and preferably cylindrical, shape,
these battery elements (2), which exhibit higher thermal conductivity along their longitudinal direction than their radial direction, being arranged in parallel rows (Ri), connected electrically together and to the terminals of the module (1) and mounted in a container (3) that forms part of said module (1),
said battery module (1) being **characterized in that** the container (3) comprises:
for the one part, at least one support body (4) made of a rigid material that is a good conductor of heat, in particular a metal material such as aluminium or an alloy of the latter, this support body (4) being in the form of a profiled component having a comb-shaped cross section, with a plurality of compartmentalizing walls (5) that are mutually parallel and regularly spaced apart from one another and with a bottom wall (6) connecting said compartmentalizing walls (5) to their bases, each pair of adjacent compartmentalizing walls (5) delimiting, with the bottom wall (6), a profiled groove (7) forming an elongate housing configured to receive, in a non-fitted manner, a row (Ri) of battery elements (2) with their longitudinal axes (AL) perpendicular to the bottom wall (6) and bearing on the latter, and,
for the other part, at least first mechanical wedging means (8), which are attached or integrated and extend at least partially between two adjacent battery elements (2), specifically for all the elements (2) in one and the same row (Ri), so as to limit, preferably prevent, the movements of said elements (2) at least in the longitudinal direction (DL) of the housing (7) that receives them and to space apart said elements (2) from the two compartmentalizing walls (5) that define the elongate housing that receives them.

2. Battery module according to Claim 1, **characterized in that** the first wedging means (8) consist either of attached spacing components that are interposed between the faces of the two opposite compartmentalizing walls (5) of each housing (7) and the battery elements (2) received in this housing (7), or of protruding, profiled or non-profiled, formations that project from the faces of said walls (5), these components or these formations (8) being configured and positioned to form gaps between the battery elements (2) and said faces (5') of the walls (5), advantageously to keep the battery elements (2) away from the particular faces (5') in each case, preferably to lock them in position in a centred manner in the particular housing (7).

3. Battery module according to Claim 1 or 2, **characterized in that** the first wedging means (8) consist, for each housing (7), of attached components in the form of ladders, or of frames provided with crosspieces, the crossmembers or crosspieces (8') of which form or carry stopping and spacing elements that are positioned respectively between two adjacent battery elements (2) and act as linear or surface contact zones (8ʺʺ) with the latter, these wedging components (8) being disposed between the faces (5') of the compartmentalizing walls (5) and the particular row (Ri) of battery elements (2), on either side thereof, each pair of opposite wedging components (8) thus forming a cage confining at least a part of the battery elements (2) of the row (Ri) received in the particular profiled housing (7).

4. Battery module according to Claim 3, **characterized in that** the side members (8") of the ladder- or frame-like wedging components (8) have edges (8‴) configured to come into contact, between two crossmembers or crosspieces, with the upper and lower ends of the cylindrical battery elements (2), as the case may be under pressure and/or with elastic deformation, specifically at the lateral edge portions of said ends, the battery elements (2) confined between two wedging components (8) thus forming a block (2") therewith.

5. Battery module according to Claim 1 or 2, **characterized in that** the first wedging means (8) consist of protruding formations, such as bosses, ridges, spikes or the like, that are an integral part of the faces of the compartmentalizing walls (5) or of components mounted on the latter, for example by interlocking.

6. Battery module according to any one of Claims 1 to 5, **characterized in that** the container (3) comprises second wedging means (10) configured and arranged to lock the battery elements against the bottom wall (6), these second wedging means (10) advantageously being in the form of a panel having a meshwork structure extending above the elongate housings (7) of the support body (4) and the different rows (Ri) of battery elements (2) and coming, as the case may be, into mechanical engagement with the first wedging means (8), above the compartmentalizing walls (5), in order to fix them in position in the upper part of the housings (7) and to ensure that they cooperate intimately with said battery elements (2) .

7. Battery module according to Claims 4 and 6, **characterized in that** the meshwork-structure panel (10) has formations (10') that are conical, bevelled or in the form of wedges and are configured to be inserted between the upper side members (8") of ladder- or frame-like first wedging components (8) disposed on either side of a given compartmentalizing wall (5), at sites (11) with complementary shapes to said side members (8"), so as to urge each of said side members (8") and the crossmembers (8') to come into contact with the particular battery elements (2) in each case that are sandwiched between two mutually opposite first wedging components (8).

8. Battery module according to any one of Claims 1 to 7, **characterized in that** the bottom wall (6) is subjected, preferably substantially over its entire surface, to the action of a thermal control means (12), for example of the type involving circulation of heat-transfer fluid (12'), said thermal control means (12) either belonging to said particular module (1), or being shared between at least two modules (1), or belonging to a set of thermal control means associated with a plurality of modules (1) .

9. Battery module according to any one of Claims 1 to 8, **characterized in that** the compartmentalizing walls (5) have, on their two faces (5'), a non-flat surface structure (5"), for example provided with a pattern of grooves/ribs or profiled undulations, the junction zones (13) of said compartmentalizing walls (5) with the bottom wall (6) advantageously having a section that flares in the direction of the latter, providing inclined or bevelled laterally supporting and centring surfaces for the first wedging means (8) and/or the battery elements (2).

10. Battery module according to any one of Claims 1 to 9, **characterized in that** it comprises flexible strips (14), made of an elastically compressible material that is a conductor of heat and an electrical insulator, resting on the bottom wall (6) in the different elongate housings (7), advantageously at protruding profiled surfaces (6') formed in the bottom of said housings (7), and against which the battery elements (2) of the particular row (Ri) come to bear, by way of their corresponding connection terminals (2') and, as the case may be, under pressure by second wedging means (10), said flexible strips (14) extending advantageously, in one or more parts, along the entire length of said housings (7) and receiving electrically conductive lines or strips (15) at their surfaces that come into contact with said terminals (2'), these conductive strips or lines (15) being placed on or integrated into the flexible strips (14) and forming part of the electrical connection means (15") of the battery elements (2) of the module (1) .

11. Battery module according to Claim 8 or either one of Claims 9 and 10, where these refer back to Claim 8, **characterized in that** the thermal control means (12) that belongs to said module (1) comprises a wall (16), preferably made of a material that is an insulator or at least a slight conductor of heat, that is attached to the external face of the bottom wall (6) of the support body (4) and forms, by cooperation therewith, a sealed double bottom (17), means (18, 18') for feeding heat-transfer liquid (12) into the interior volume of the double bottom (17) and discharging it therefrom being integrated into said attached wall (16) or wall formed by being joined to the bottom wall (6).

12. Battery module according to Claim 11, **characterized in that** the internal volume of the double bottom (17) comprises one or more path(s) for the heat-transfer fluid (12') to circulate between an inlet port (18) and an outlet port (18'), this/these path(s) being formed either only by formations (16') integrated into the attached wall (16) of the double bottom (17) or by cooperation of mutually complementary formations present on the bottom wall (6) and on the attached wall (16).

13. Battery module according to either one of Claims 11 and 12, **characterized in that** the profiled support body (4) has, along the lateral sides of the bottom wall (6), outwardly protruding lips (19), and **in that** the attached wall (16), which forms the double bottom (17) with the bottom wall (6), is secured to said support body (4) at said lips (19), for example by clip-fastening means (17'), by screw means or by similar mechanical assembly means.

14. Battery (20) for a motor-driven vehicle, in particular for a hybrid or electric motor vehicle, **characterized in that** it comprises at least one battery module (1) according to any one of Claims 1 to 10.

15. Battery according to Claim 14, **characterized in that** it comprises a single battery module (1), preferably provided with a thermal control means (12) according to one of Claims 11 to 13, and a cover (21), which is advantageously perforated and preferably made of an electrically insulating material, such as plastic or the like, the walls of which form a U shape and are configured to cover the open faces of the elongate housings (7) of the support body (4) of the module (1), so as to form, with the container (3), a continuous outer shell and a closed enclosure in which the battery elements (2) are held in a manner locked mechanically in position.

16. Battery according to Claim 14, **characterized in that** it comprises two battery modules (1) that are joined together with their respective bottom walls (6) facing one another in a spaced-apart manner and with a volume (22) for heat-transfer fluid (12') to circulate in being created in between, forming a common thermal control means (12) with inlet and outlet ports (18, 18'), and advantageously two covers (21), the walls of which each form a U shape and are configured to cover the open faces of the elongate housings (7) of one of the two support bodies (1), so as to form, with the two containers (3), two closed, side-by-side enclosures in which the battery elements are held in a manner locked mechanically in position.

17. Battery according to Claim 14, **characterized in that** it comprises at least two, preferably several, battery modules (1) disposed in a first casing part forming a tray (23) and having receiving locations (24) for said modules (1), each of said locations (24) having a thermal control means (12) either in the form of a reinforced wall portion that forms a double bottom with the bottom wall (6) of the support body (4), or in the form of a support surface for the bottom wall (6), which is temperature controlled, of the support body (4) of a battery module (1), a second casing part forming a cover being provided to create, by cooperation with the abovementioned first part (23), a closed casing, integrating thermal control means and means for electrically connecting the different modules (1) to one another.
